# EUROPÄISCHE PATENTSCHRIFT

(11) **EP 2 579 374 B1**
(45) Veröffentlichungstag und Bekanntmachung des Hinweises auf die Patenterteilung: **19.07.2017**
(21) Anmeldenummer: 12186913.5
(22) Anmeldetag: 02.10.2012
(51) Int. Cl.: H01M 8/04

(54) **Verfahren zum Kühlen einer wärmeerzeugenden Vorrichtung eines Unterseeboots und insbesondere zum Kühlen einer Brennstoffzellenanlage in einem Unterseeboot und Kühlvorrichtung zum Kühlen einer wärmeerzeugenden Vorrichtung in einem Unterseeboot und insbesondere zum Kühlen einer Brennstoffzellenanlage in einem Unterseeboot**
Method for cooling a heat-generating device of a submarine, in particular for cooling a fuel cell assembly in a submarine and cooling device for cooling a heat-generating device in a submarine, in particular for cooling a fuel cell assembly in a submarine
Procédé de refroidissement d'un dispositif produisant de la chaleur d'un sous-marin et en particulier pour refroidir une installation de cellules combustibles dans un sous-marin et dispositif de refroidissement d'un dispositif produisant de la chaleur dans un sous-marin et en particulier pour refroidir une installation de cellules combustibles dans un sous-marin

(30) Priorität: 04.10.2011 DE 102011083988
(43) Veröffentlichungstag der Anmeldung: 10.04.2013
(73) Patentinhaber: ThyssenKrupp Marine Systems GmbH, 24143 Kiel (DE)
(72) Erfinder: Schmidt, B. Eng. Katharina, 24118 Kiel (DE); Henkel, B. Eng. Marcel, 24103 Kiel (DE); Herzog, Dipl.-Ing. Markus, 24582 Bordesholm (DE); Mechsner, Dipl.-Ing. Alfred, 24148 Kiel (DE); Pein, Dr. Ing. Marc, 24147 Kiel (DE); Pommer, Dipl.-Ing. Hans, 24360 Barkelsby (DE)
(74) Vertreter: thyssenkrupp Intellectual Property GmbH

(56) Entgegenhaltungen:
- WO-A1-2004/030182
- DE-A1- 10 031 241
- DE-A1-102006 055 966
- DE-C1- 4 430 799
- JP-A- 2002 124 269
- US-A- 4 344 850
- US-A1- 2002 164 512
- US-B1- 6 416 892

## Beschreibung

Die Erfindung betrifft ein Verfahren zum Kühlen einer wärmeerzeugenden Vorrichtung, insbesondere zum Kühlen einer Brennstoffzellenanlage eines Unterseeboots, bei dem ein Kühlmittel im Kreislauf durch die Vorrichtung geführt wird. Ferner betrifft die Erfindung ein Unterseeboot mit einer Kühlvorrichtung für eine Brennstoffzellenanlage, die eine Ringleitung aufweist, in welcher ein Kühlmittel in einem Kreislauf geführt ist.

Bei Unterseebooten mit einer Brennstoffzellenanlage ist es üblich, die bei der Reaktion von Wasserstoff und Sauerstoff in den Brennstoffzellen anfallende Wärme über ein Kühlmittel abzuführen. Das Kühlmittel wird in einem Kreislauf geführt. Mittels einer Pumpe wird in diesem Kreislauf ein Kühlmittelstrom erzeugt, der um die Brennstoffzellen der Brennstoffzellenanlage herumgeführt bzw. durch diese hindurch geführt wird. Es hat sich gezeigt, dass in dem Kühlmittelkreislauf und insbesondere in der dort angeordneten Pumpe Geräusche auftreten, die bei einem militärischen Unterseeboot unerwünscht sind.

In WO 2004/030182 A1 ist ein redundantes Kühlsystem mit zwei Kühlkreisläufen für einen elektrischen Motor beschrieben, bei dem in jedem der beiden Kühlkreisläufe eine Entgasungsvorrichtung in Form einer Entlüftung angeordnet ist.

Aus DE 10 2006 055 966 A2, die eine kerntechnische Anlage und ein Verfahren zum Betreiben einer kerntechnischen Anlage betrifft, ist eine Vergasungsvorrichtung für ein Reaktorkühlmittel bekannt, die zur thermischen Entgasung dient, wobei das Kühlmittel ähnlich der Entgasung in Dampfkreisläufen aufgeheizt wird und mit Dampf entgast wird.

JP 2002-124269 A ist ein Kühlwassersystem für eine Brennstoffzelle zu entnehmen, bei dem ein Teilstrom des Kühlwassers über eine Entlüftungseinrichtung mit einen Blasenabschneider und einen Entlüftungstopf geführt wird.

In DE 100 31 241 A1 ist ein System zum Abscheiden von CO2 aus dem Kühlmittel/Brennstoff-Volumenstrom des Anodenkreislaufs einer Direkt-Methanol-Brennstoffzelle beschrieben. Bei einer solchen Brennstoffzelle entstehen große Mengen an CO2, die abgetrennt werden müssen, was in dem Anodenkreis durch Zerstäuben des Kühlwassers erfolgt.

Aus US 4,344,850 A geht ein Kühlsystem zum Kühlen einer Brennstoffzelle hervor, welches auf einer höheren Temperatur betrieben wird und bei dem Dampf für einen Dampfreformer ausgekoppelt wird. In dem Kühlwassersystem ist ein thermischer Entgaser angeordnet, wie er in jedem Dampfsystem vorgesehen ist.

US 6,416,891 B1 betrifft eine Vorrichtung zum ineinandergreifenden Enthalpie-Austausch für ein Brennstoffzellenkraftwerk. Ein Kühlmittelkreislauf zum Kühlen der Brennstoffzelle wird von einem Kühlmittelspeicher gespeist, welcher in dem Gehäuse der Vorrichtung zum Enthalpie-Austausch angeordnet ist, wo eine Entgasung des Kühlmittels stattfindet.

Vor diesem Hintergrund liegt der Erfindung die Aufgabe zugrunde, ein in akustischer Hinsicht verbessertes Verfahren zum Kühlen einer wärmeerzeugenden Vorrichtung eines Unterseeboots, insbesondere zum Kühlen einer Brennstoffzellenanlage eines Unterseeboots und ein Unterseeboot mit einer Kühlvorrichtung für eine Brennstoffzellenanlage in einem Unterseeboot zur Verfügung zu stellen.

Die das Verfahren betreffende Teilaufgabe der Erfindung wird durch ein Verfahren der eingangs genannten Art zum Kühlen einer wärmeerzeugenden Vorrichtung eines Unterseeboots gelöst, wobei erfindungsgemäß ein Teilstrom des Kühlmittels, bei dem es sich vorzugsweise um Wasser handelt, aus dem Kühlmittelkreislauf in einen Flüssigkeitsentgaser in Form eines Vakuumentgasers abgeleitet wird und anschließend wieder dem Kühlmittelkreislauf zugeführt wird.

Dieser Maßnahme liegt die Überlegung zugrunde, dass sich trotz einer Entlüftung des Kühlmittelkreislaufs in dem Kühlmittel gelöstes Gas befinden kann, das bei einer Wärmeaufnahme des Kühlmittels, wie sie bei der Kühlung wärmeerzeugender Vorrichtungen, z. B. der Brennstoffzellen der Brennstoffzellenanlage zwangsläufig auftritt, unter Bildung größerer Gasblasen bzw. Gasnester aus dem Kühlmittel entgasen kann und daher auch das in dem Kühlmittel gelöste Gas aus dem Kühlmittel und aus dem Kühlmittelkreislauf zu entfernen ist.

Hierzu wird bei dem erfindungsgemäßen Verfahren der Flüssigkeitsentgaser verwendet, in welchem das Gas von dem Kühlmittel getrennt wird und so anschließend aus dem Kühlmittelkreislauf abgeleitet werden kann. Es hat sich gezeigt, dass hierdurch die in dem Kühlmittelkreislauf und dessen Pumpe auftretenden Geräusche zumindest deutlich reduziert werden bzw. bestenfalls nicht mehr wahrnehmbar sind. Als positiver Nebeneffekt kommt hinzu, dass die Gefahr kavitationsbedingter Schäden in dem Kühlmittelkreislauf verringert wird. In dem Vakuumentgaser wird ein Unterdruck erzeugt, wodurch sich der Anteil des in dem Kühlmittel gelösten Gases nach den Gesetzmäßigkeiten des Henryschen Gesetzes durch Entgasung verringert.

Zweckmäßigerweise wird die Zuführung eines Teilstroms des Kühlmittels zu dem Flüssigkeitsentgaser zyklisch wiederholt. Demzufolge wird der Vorgang, bei dem aus dem Kühlmittelkreislauf ein bestimmter Teilstrom des Kühlmittels entnommen wird, dem Teilstrom des Kühlmittels in dem Flüssigkeitsentgaser das darin gelöste Gas entzogen wird und dieses freigesetzte Gas aus dem Kühlmittelkreislauf abgeleitet wird, fortlaufend wiederholt. Dies hat den Vorteil, dass zunächst der Gasgehalt in dem Kühlmittelkreislauf kontinuierlich verringert wird und dann ein quasi gasloser Zustand des Kühlmittels gehalten wird.

Zur Überprüfung des Gasgehalts des Kühlmittels wird bevorzugt die bei der Entgasung des Kühlmittels anfallende Gasmenge erfasst. Hierbei wird zweckmäßigerweise die pro Entgasungszyklus anfallende Gasmenge ermittelt, um aus diesen Werten indirekt den Anteil des noch in dem Kühlmittel gelösten Gases abschätzen zu können.

Vorteilhaft wird hierzu das bei der Entgasung des Kühlmittels in einem Zyklus anfallende Gas einem Kontrollbehälter zugeführt und in diesem Kontrollbehälter gesammelt. Anschließend kann die in dem Kontrollbehälter befindliche Gasmenge ermittelt werden und das Gas dann aus dem Kontrollbehälter abgelassen werden. Alternativ kann in dem Kontrollbehälter das bei mehreren Entgasungszyklen anfallende Gas gesammelt werden, wobei in diesem Fall nach jedem Entgasungszyklus die Gasmenge in dem Kontrollbehälter ermittelt wird und durch Differenzbildung die Gasmenge pro Zyklus bestimmt wird.

Die in dem Kontrollbehälter befindliche Gasmenge kann mit geeigneten Messmitteln direkt ermittelt werden. Bevorzugt ist aber eine indirekte Ermittlung der Gasmenge über den in dem Kontrollbehälter herrschenden Gasdruck. Dieser Gasdruck in dem Kontrollbehälter wird vorteilhafterweise pro Entgasungszyklus ermittelt. Bei gleichzeitiger Kenntnis der in dem Kontrollbehälter herrschenden Temperatur kann auf Grundlage der thermischen Zustandsgleichung für Gase die pro Entgasungszyklus anfallende Gasmenge bestimmt werden. Hierzu wird pro Entgasungszyklus zweckmäßigerweise auch die Temperatur in dem Kontrollbehälter ermittelt.

Bei Erreichen eines bestimmten Druckniveaus in dem Kontrollbehälter wird das dort gesammelte Gas zweckmäßigerweise in die Atmosphäre des Unterseeboots, also in dessen Innenraum abgelassen. Hierzu kann vorteilhaft ausgangsseitig des Kontrollbehälters in einer von dem Kontrollbehälter zu der Atmosphäre des Unterseeboots führenden Leitung ein Ventil vorgesehen sein, das zum Ablassen des Gases geöffnet wird.

Gemäß einer weiteren vorteilhaften Weiterbildung des erfindungsgemäßen Verfahrens kann das Kühlmittel zusätzlich auch durch einen Blasenabscheider geführt werden, in dem das in dem Kühlmittel nicht gelöst sondern in Form von Blasen vorliegende Gas von dem Kühlmittel getrennt und aus dem Kühlmittelkreislauf entfernt wird. Mit dem Blasenabscheider lassen sich bei kontinuierlicher Prozessführung schnell vergleichsweise große Gasmengen aus dem Kühlmittel abscheiden. Besonders vorteilhaft kann das Kühlmittel, bevor es dem Flüssigkeitsentgaser zugeführt wird, durch den Blasenabscheider geleitet werden, wo dann quasi eine Vorreinigung des Kühlmittels stattfindet, sodass das dem Flüssigkeitsentgaser zugeführte Kühlmittel lediglich darin gelöstes Gas aufweist, welches von dem Blasenabscheider nicht abgeschieden werden kann.

Die das Unterseeboot betreffende Teilaufgabe der Erfindung wird durch ein Unterseeboot mit einer Brennstoffzellenanlage und mit einer Kühlvorrichtung für die Brennstoffzellenanlage gelöst, bei der ein Kühlmittel im Kreislauf geführt ist und hierzu eine Ringleitung vorgesehen ist. An der Ringleitung ist eine parallele Leitung ausgebildet, in welcher ein Flüssigkeitsentgaser in Form eines Vakuumentgasers angeordnet ist. D. h., an der Ringleitung zweigt ein Leitungsstrang ab, der zu einem Flüssigkeitsentgaser führt und ausgangsseitig des Flüssigkeitsentgasers wieder in der Ringleitung mündet. Über die Parallelleitung wird ein Teilstrom des Kühlmittels zu dem Flüssigkeitsentgaser geleitet. Dort wird das in dem Kühlmittel gelöste Gas von dem Kühlmittel getrennt und aus dem Kühlmittelkreislauf abgeleitet. Die Verwendung des Vakuumentgasers als Flüssigkeitsentgaser hat den Vorteil, dass er ein Entgasen des Kühlmittels bei einem geringen Temperaturniveau ermöglicht.

Vorteilhafterweise weist der Vakuumentgaser einen Evakuierungsbehälter und eine ausgangsseitig des Evakuierungsbehälters angeordnete Pumpe auf. In dem Evakuierungsbehälter findet die Trennung des in dem Kühlmittel gelösten Gases von dem Kühlmittel statt. Hierzu wird in dem Evakuierungsbehälter mittels der dem Evakuierungsbehälter nachgeschalteten Pumpe ein Unterdruck erzeugt. Bei der Pumpe handelt es sich bevorzugt um eine Verdrängerpumpe und besonders vorteilhaft um eine Zahnradpumpe.

Zur Erzeugung des Unterdrucks in dem Evakuierungsbehälter ist ein Kühlmitteleinlass des Evakuierungsbehälters zuvor zu verschließen. Hierzu ist eingangsseitig des Evakuierungsbehälters zweckmäßigerweise ein steuerbares Absperrventil angeordnet.

Zum Ablassen des von dem Kühlmittel getrennten Gases weist der Evakuierungsbehälter vorteilhaft einen Gasauslass auf. Dieser Gasauslass wird vorzugsweise von einem Entlüftungsventil gebildet. Von dem Gasauslass kann das Gas direkt in das Unterseeboot abgeführt werden. Bevorzugt ist allerdings vorgesehen, zuvor die bei der Entgasung anfallende Gasmenge zu bestimmen, was Rückschlüsse über den Gasgehalt des gesamten in dem Kühlmittelkreislauf befindlichen Kühlmittels erlaubt. Hierzu ist der Gasauslass des Evakuierungsbehälters bevorzugt mit einem Kontrollbehälter leitungsverbunden. In dem Kontrollbehälter wird das aus dem Kühlmittel entgaste Gas zunächst gesammelt und seine Menge bestimmt.

Zur Bestimmung der in dem Kontrollbehälter befindlichen Gasmenge weist die erfindungsgemäße Kühlvorrichtung vorteilhaft Mittel zur Erfassung einer Gasmenge auf. Hierzu kann beispielsweise eingangseitig des Kontrollbehälters eine Durchflussmesseinrichtung angeordnet sein, mit der der in den Kontrollbehälter pro Zyklus einströmende Gasvolumenstrom ermittelt wird, oder der Kontrollzylinder kann ein veränderbares Volumen aufweisen, wobei sich die in dem Kontrollbehälter befindliche Gasmenge aus der bei dem Einströmen des Gases ergebenden Volumenvergrößerung des Kontrollbehälters herleiten lässt.

Bevorzugt erfolgt die Ermittlung der in dem Kontrollbehälter befindlichen Gasmenge über den in dem Kontrollbehälter herrschenden Gasdruck und die in dem Kontrollbehälter herrschende Temperatur. Zu diesem Zweck sind vorteilhaft Mittel zur Erfassung des Drucks sowie weiter vorteilhaft Mittel zur Erfassung der Temperatur in dem Kontrollbehälter vorgesehen. Mit Hilfe der von diesen Mitteln erfassten Werte für den Gasdruck in dem Kontrollbehälter und der dort herrschenden Temperatur kann die in dem Kontrollbehälter befindliche Gasmenge berechnet werden. Darüber hinaus kann mit den Mitteln zur Erfassung des Drucks in dem Kontrollbehälter auch festgestellt werden, wann der Gasdruck in dem Kontrollbehälter einen zulässigen maximalen Wert erreicht und es erforderlich ist, Gas aus dem Kontrollbehälter abzulassen. Zum Ablassen des Gases aus dem Kontrollbehälter wird ein an dem Gasauslass des Kontrollbehälters angeordnetes Absperrventil geöffnet.

In einer weiteren bevorzugten Ausgestaltung der erfindungsgemäßen Kühlvorrichtung ist an der Parallelleitung der Ringleitung ein Kühlmitteleinlass der Kühlvorrichtung angeordnet. D.h., das Kühlmittel wird nicht direkt in den Kühlmittelkreislauf bzw. die Ringleitung eingeleitet sondern in den Leitungsstrang, in dem der Flüssigkeitsentgaser angeordnet ist. Dies ist insofern vorteilhaft, als dass das Kühlmittel bevor es in die Ringleitung gelangt, bereits von etwaig darin gelöstem Gas befreit wird.

Weiter vorteilhaft kann die erfindungsgemäße Kühlvorrichtung einen Blasenabscheider aufweisen. Der Blasenabscheider dient dazu, Gasblasen, die aufgrund der dynamischen Verhältnisse in dem Kühlmittelkreislauf mit dem Kühlmittel mitgerissen werden und auf diese Weise nicht von einem herkömmlichen Entlüfter der Kühlvorrichtung abgeschieden werden können, aus dem Kühlkreislauf zu entfernen. Hierzu weist der Blasenabscheider in seinem Inneren Störkörper auf, an denen in dem Kühlmittel befindliche Gasblasen durch Adhäsionskräfte haften bleiben und sich mit bereits dort befindlichen Gasblasen zu größeren Blasen verbinden. Sobald die Gasblasen ein bestimmtes Volumen aufweisen, steigen Sie in dem Blasenabscheider auftriebsbedingt entgegen der Schwerkraftrichtung auf, wo sie in dem Innenraum des Unterseeboots abgeschieden werden. Zweckmäßigerweise ist der Blasenabscheider eingangsseitig des Flüssigkeitsentgasers in der Ringleitung angeordnet, sodass das Kühlmittel, das dem Flüssigkeitsentgaser zugeführt wird, bereits von dem in Blasenform vorliegenden Gas befreit ist und lediglich in dem Kühlmittel gelöstes Gas aufweist.

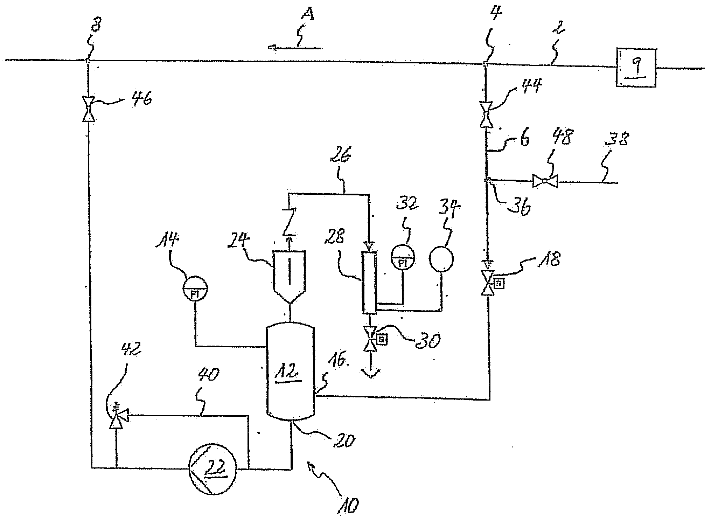

Nachfolgend wird die Erfindung anhand eines in der Zeichnung dargestellten Ausführungsbeispiels näher erläutert.

Die Zeichnung zeigt in einer stark vereinfachten Prinzipskizze einen Abschnitt einer Ringleitung 2, die Teil einer Kühlvorrichtung für eine Brennstoffzellenanlage als wärmeerzeugende Vorrichtung in einem Unterseeboot ist. Über die Ringleitung 2 wird Kühlmittel im Kreislauf in eine nicht dargestellte Brennstoffzellenanlage geleitet, um dort die Brennstoffzellen zu kühlen.

Die Ringleitung 2, die in einer Richtung A von dem Kühlmittel durchströmt wird, weist eine Leitungsverzweigung 4 auf. An dieser Leitungsverzweigung 4 zweigt von der Ringleitung 2 eine Parallelleitung 6 ab, die abströmseitig der Leitungsverzweigung 4 an einer Leitungsverzweigung 8 wieder in die Ringleitung 2 mündet. Über die Leitungsverzweigung 4 wird ein Teilstrom des in der Ringleitung 2 im Kreislauf fließenden Kühlmittels in die Parallelleitung 6 abgeleitet und anschließend an der Leitungsverzweigung 8 wieder zurück in die Ringleitung 2 geführt.

Anströmseitig der Leitungsverzweigung 4 ist in der Ringleitung 2 ein Blasenabscheider 9 angeordnet. In diesem Blasenabscheider 9 wird in dem Kühlmittel befindliches Gas, das dort in Form von Gasblasen vorliegt, aus dem Kühlmittel in den Innenraum des Unterseeboots ausgeschieden.

In der Parallelleitung 6 ist ein Flüssigkeitsentgaser 10 in Form eines Vakuumentgasers angeordnet. Der Flüssigkeitsentgaser 10 weist einen Evakuierungsbehälter 12 auf. An diesem Evakuierungsbehälter 12 ist ein Druckmessgerät 14 zur Ermittlung des in dem Evakuierungsbehälter 12 herrschenden Druckes angeschlossen. Der Evakuierungsbehälter 12 weist einen Kühlmitteleinlass 16 auf, an dem ein erster Teil der Parallelleitung 6 mündet. In diesem Teil der Parallelleitung 6 ist eingangsseitig des Evakuierungsbehälters 12 ein steuerbares Absperrventil 18 angeordnet.

Ein zweiter Teil der Parallelleitung 6 verläuft von einem Kühlmittelauslass 20 des Evakuierungsbehälters 12 zu der Leitungsverzweigung 8. In diesem zweiten Teil der Parallelleitung 6 ist ausgangsseitig des Evakuierrungsbehälters 12 eine Pumpe 22 angeordnet. Die Pumpe 22 ist auch Teil des Flüssigkeitsentgasers 10.

Des Weiteren weist der Evakuierungsbehälter 12 einen Gasauslass in Form eines Entlüftungsventils 24 auf. Ausgangsseitig des Belüftungsventils 24 führt eine Leitung 26 zu einem Kontrollbehälter 28. Ein Gasauslass des Kontrollbehälters 28 wird von einem steuerbaren Absperrventil 30 verschlossen. An dem Kontrollbehälter 28 sind ein Drucksensor 32 und ein Temperatursensor 34 angeschlossen.

An dem ersten Teil der Parallelleitung 6 ist eingangsseitig des Absperrventils 18 eine Leitungsverzweigung 36 ausgebildet, an der ein Einlass 38 mündet. Der Einlass 38 dient dazu, dem Kühlmittelkreislauf, d.h. der Ringleitung 2 gegebenenfalls neues Kühlmittel zuzuführen.

Die Pumpe 22 wird von einer Parallelleitung 40 überbrückt, in der ein Überdruckventil 42 angeordnet ist. Die Parallelleitung 40 und das dort angeordnete Überdruckventil 42 dienen dazu, bei einer Blockade der Pumpe 22 eingangsseitig der Pumpe 22 einen unzulässig hohen Druck zu verhindern.

In der Parallelleitung 6 sind direkt abströmseitig der Leitungsverzweigung 4 ein Absperrventil 44 und direkt anströmseitig der Leitungsverzweigung 8 ein Absperrventil 46 angeordnet. Die Absperrventile 44 und 46 dienen dazu, durch Schließen dieser Absperrventile 44 und 46 den Leitungsstrang der Parallelleitung 6 zwischen den Absperrventilen 44 und 46 strömungsmäßig von der Ringleitung 2 bei Wartungsarbeiten und bei Leckagen in diesem Leitungsstrang zu trennen.

Die Funktionsweise der in der Zeichnungsfigur dargestellten Anordnung ist wie folgt:
Zu Kühlungszwecken fließt über die Ringleitung 2 im Kreislauf ein Kühlmittel durch die in der Zeichnungsfigur nicht dargestellte Brennstoffzellenanlage des Unterseebootes. Ein Teilstrom dieses Kühlmittels wird an der Leitungsverzweigung 4 in die Parallelleitung 6 geleitet und fließt in den Evakuierungsbehälter 12 des Flüssigkeitsentgasers 10. Zuvor wird das Kühlmittel in dem in der Ringleitung 2 angeordneten Blasenabscheider 9 von in dem Kühlmittel in Blasenform vorliegenden Gas befreit.

Sobald der Evakuierungsbehälter 12 in einem bestimmten Maße gefüllt ist, wird das Absperrventil 18 mittels einer nicht dargestellten Steuerung schließend gestellt. Mit der dem Evakuierungsbehälter 12 nachgeschalteten Pumpe 22 des Flüssigkeitsentgasers 10 wird in dem Evakuierungsbehälter 12 ein Unterdruck von etwa 0,3 bar erzeugt, wodurch in dem Evakuierungsbehälter 12 das in dem Kühlmittel gelöste Gas freigesetzt wird.

Dieses in dem Evakuierungsbehälter 12 freigesetzte Gas wird über das Entlüftungsventil 24 und die nachfolgende Leitung 26 in den Kontrollbehälter 28 geleitet und dort gesammelt, in dem das Absperrventil 18 geöffnet wird und Kühlmittel in den Evakuierungsbehälter 22 strömt. Anschließend wird in dem Kontrollbehälter 28 mittels des Drucksensors 32 der in dem Kontrollbehälter 28 herrschende Druck und mittels des Temperatursensors 34 die in dem Kontrollbehälter 28 herrschende Temperatur ermittelt. Die ermittelten Messwerte werden an eine nicht dargestellte Steuerung weitergeleitet, wo aus diesen Messwerten die in dem Kontrollbehälter 28 befindliche Gasmenge ermittelt wird.

Anschließend wird das Absperrventil 18 wieder schließend geschaltet und der zuvor beschriebene Vorgang fortlaufend zyklisch wiederholt. Hierbei weist das ausgangsseitig des Kontrollbehälters 28 angeordnete Absperrventil 30 eine Schließstellung auf, sodass in dem Kontrollbehälter 28 das bei mehreren Entgasungszyklen aus dem Kühlmittel entgaste Gas gesammelt wird. Erst wenn der Kontrollbehälter 28 vollständig gefüllt ist, wird das Absperrventil 30 von einer nicht dargestellten Steuerung öffnend gestellt und das Gas in die Atmosphäre des Unterseeboots ausgelassen.

Neben der Verwendung zur Entgasung des in der Ringleitung 2 befindlichen Kühlmittels kann der Flüssigkeitsentgaser 10 auch zur Entgasung von Kühlmittel verwendet werden, das neu dem bereits in der Ringleitung 2 befindlichen Kühlmittel hinzugefügt werden soll. Hierzu wird dieses Kühlmittel nicht direkt in die Ringleitung 2 eingeleitet, sondern über den Einlass 38 nach dem Öffnen eines dort angeordneten Absperrventils 48 in die Parallelleitung 6 eingeleitet, wo dann der bereits beschriebene Entgasungsvorgang abläuft. Anschließend wird dieses von Gas befreite Kühlmittel an der Leitungsverzweigung 8 in die Ringleitung 2 eingeleitet.

### Bezugszeichenliste

- 2: Ringleitung
- 4: Leitungsverzweigung
- 6: Parallelleitung
- 8: Leitungsverzweigung
- 9: Blasenabscheider
- 10: Flüssigkeitsentgaser
- 12: Evakuierungsbehälter
- 14: Druckmessgerät
- 16: Kühlmitteleinlass
- 18: Absperrventil
- 20: Kühlmittelauslass
- 22: Pumpe
- 24: Entlüftungsventil
- 26: Leitung
- 28: Kontrollbehälter
- 30: Absperrventil
- 32: Drucksensor
- 34: Temperatursensor
- 36: Leitungsverzweigung
- 38: Einlass
- 40: Parallelleitung
- 42: Überdruckventil
- 44: Absperrventil
- 46: Absperrventil
- 48: Absperrventil

- A: Richtung

## Patentansprüche

1. Verfahren zum Kühlen einer wärmeerzeugenden Vorrichtung eines Unterseeboots, insbesondere zum Kühlen einer Brennstoffzellenanlage eines Unterseeboots, bei dem ein Kühlmittel in einem Kühlmittelkreislauf durch die wärmeerzeugende Vorrichtung geführt wird, **dadurch gekennzeichnet**, das ein Teilstrom des Kühlmittels aus dem Kühlmittelkreislauf in einen Flüssigkeitsentgaser (10) in Form eines Vakuumentgasers abgeleitet wird und anschließend wieder dem Kühlmittelkreislauf zugeführt wird.

2. Verfahren nach Anspruch 1, **dadurch gekennzeichnet, dass** die Zuführung eines Teilstroms des Kühlmittels zu dem Flüssigkeitsentgaser (10) zyklisch wiederholt wird.

3. Verfahren nach einem der vorangehenden Ansprüche, **dadurch gekennzeichnet, dass** die bei der Entgasung des Kühlmittels pro Zyklus anfallende Gasmenge erfasst wird.

4. Verfahren nach Anspruch 3, **dadurch gekennzeichnet, dass** das bei der Entgasung des Kühlmittels in einem Zyklus anfallende Gas einem Kontrollbehälter (28) zugeführt wird.

5. Verfahren nach Anspruch 4, **dadurch gekennzeichnet, dass** der Gasdruck in dem Kontrollbehälter (28) ermittelt wird.

6. Verfahren nach einem der Ansprüche 4 oder 5, **dadurch gekennzeichnet, dass** die Temperatur in dem Kontrollbehälter (28) ermittelt wird.

7. Verfahren nach einem der vorausgehenden Ansprüche, **dadurch gekennzeichnet, dass** das Kühlmittel durch einen Blasenabscheider (9) geleitet wird.

8. Unterseeboot mit einer Kühlvorrichtung für eine Brennstoffzellenanlage, wobei in der Kühlvorrichtung ein Kühlmittel im Kreislauf geführt ist, mit einer Ringleitung (2) zur Bildung des Kühlmittelkreislaufs, **dadurch gekennzeichnet, dass** an der Ringleitung (2) eine Parallelleitung (6) ausgebildet ist, in welcher ein Flüssigkeitsentgaser (10) in Form eines Vakuumentgasers angeordnet ist.

9. Unterseeboot nach Anspruch 8, **dadurch gekennzeichnet, dass** der Vakuumentgaser einen Evakuierungsbehälter (12) und eine ausgangsseitig des Evakuierungsbehälters (12) angeordnete Pumpe (22) aufweist.

10. Unterseeboot nach einem der Ansprüche 8 oder 9, **dadurch gekennzeichnet, dass** eingangsseitig des Vakuumentgasers ein steuerbares Absperrventil (18) angeordnet ist.

11. Unterseeboot nach einem der Ansprüche 9 oder 10, **dadurch gekennzeichnet, dass** der Evakuierungsbehälter (12) einen Gasauslass aufweist, der mit einem Kontrollbehälter (28) leitungsverbunden ist.

12. Unterseeboot nach Anspruch 11, **dadurch gekennzeichnet, dass** die Kühlvorrichtung Mittel zur Erfassung der Gasmenge in dem Kontrollbehälter (28) aufweist.

13. Unterseeboot nach einem der Ansprüche 11 oder 12, **dadurch gekennzeichnet, dass** Mittel zur Erfassung des Drucks in dem Kontrollbehälter (28) vorgesehen sind.

14. Unterseeboot nach einem der Ansprüche 11 bis 13, **dadurch gekennzeichnet, dass** Mittel zur Erfassung der Temperatur in dem Kontrollbehälter (28) vorgesehen sind.

15. Unterseeboot nach einem der Ansprüche 8 bis 14, **dadurch gekennzeichnet, dass** an der Parallelleitung (6) der Ringleitung (2) ein Kühlmitteleinlass (38) der Kühlvorrichtung angeordnet ist.

16. Unterseeboot nach einem der Ansprüche 8 bis 15, **dadurch gekennzeichnet, dass** die Kühlmittelvorrichtung einen Blasenabscheider (9) aufweist.

## Claims

1. Method for cooling a heat-generating device of a submarine, in particular for cooling a fuel cell system of a submarine, in which a coolant is guided in a coolant circuit through the heat-generating device, **characterized in that** a partial flow of the coolant is diverted from the coolant circuit into a liquid degasifier (10) in the form of a vacuum degasifier and subsequently returned to the coolant circuit.

2. Method according to Claim 1, **characterized in that** the supply of a partial flow of the coolant to the liquid degasifier (10) is repeated cyclically.

3. Method according to either of the preceding claims, **characterized in that** the amount of gas accumulating per cycle during the degasification of the coolant is recorded.

4. Method according to Claim 3, **characterized in that** the gas accumulating in one cycle during the degasification of the coolant is supplied to a control container (28).

5. Method according to Claim 4, **characterized in that** the gas pressure in the control container (28) is determined.

6. Method according to either of Claims 4 and 5, **characterized in that** the temperature in the control container (28) is determined.

7. Method according to one of the preceding claims, **characterized in that** the coolant is directed through a bubble separator (9).

8. Submarine having a cooling device for a fuel cell system, wherein a coolant is circulated in the cooling device, having a ring line (2) for forming the coolant circuit, **characterized in that**, on the ring line (2), a parallel line (6) is formed in which a liquid degasifier (10) in the form of a vacuum degasifier is arranged.

9. Submarine according to Claim 8, **characterized in that** the vacuum degasifier comprises an evacuation container (12) and a pump (22) arranged on the outlet side of the evacuation container (12).

10. Submarine according to either of Claims 8 and 9, **characterized in that** a controllable shut-off valve (18) is arranged on the inlet side of the vacuum degasifier.

11. Submarine according to either of Claims 9 and 10, **characterized in that** the evacuation container (12) comprises a gas outlet, which is line-connected to a control container (28).

12. Submarine according to Claim 11, **characterized in that** the cooling device comprises means for recording the amount of gas in the control container (28).

13. Submarine according to either of Claims 11 and 12, **characterized in that** means for recording the pressure in the control container (28) are provided.

14. Submarine according to one of Claims 11 to 13, **characterized in that** means for recording the temperature in the control container (28) are provided.

15. Submarine according to one of Claims 8 to 14, **characterized in that** a coolant inlet (38) of the cooling device is arranged on the parallel line (6) of the ring line (2).

16. Submarine according to one of Claims 8 to 15, **characterized in that** the coolant device comprises a bubble separator (9).

## Revendications

1. Procédé de refroidissement d'un ensemble produisant de la chaleur dans un sous-marin, en particulier de refroidissement d'une installation de cellules à combustible d'un sous-marin, dans lequel un agent de refroidissement est amené dans un circuit d'agent de refroidissement qui traverse l'ensemble produisant de la chaleur,
**caractérisé en ce que**
une partie de l'écoulement d'agent de refroidissement provenant du circuit d'agent de refroidissement est déviée dans un dégazeur (10) de liquide qui présente la forme d'un dégazeur sous vide et est ensuite ramenée dans le circuit d'agent de refroidissement.

2. Procédé selon la revendication 1, **caractérisé en ce que** l'amenée d'une partie de l'écoulement d'agent de refroidissement dans le dégazeur (10) de liquide est répétée cycliquement.

3. Procédé selon l'une des revendications précédentes, **caractérisé en ce que** la quantité de gaz produit lors de chaque cycle de dégazage de l'agent de refroidissement est saisi.

4. Procédé selon la revendication 3, **caractérisé en ce que** le gaz produit dans un cycle lors du dégazage d'agent de refroidissement est amené dans un récipient de contrôle (28).

5. Procédé selon la revendication 4, **caractérisé en ce que** la pression du gaz dans le récipient de contrôle (28) est déterminée.

6. Procédé selon l'une des revendications 4 ou 5, **caractérisé en ce que** la température qui règne dans le récipient de contrôle (28) est déterminée.

7. Procédé selon l'une des revendications précédentes, **caractérisé en ce que** l'agent de refroidissement est amené dans un séparateur (9) de bulles.

8. Sous-marin doté d'un ensemble de refroidissement dans une installation de cellules à combustible, dans lequel un fluide de refroidissement est mis en circulation en circuit fermé dans l'ensemble de refroidissement, le circuit présentant un conduit annulaire (2) qui forme le circuit d'agent de refroidissement,
**caractérisé en ce que**
un conduit parallèle (6) dans lequel un dégazeur (10) de liquide présentant la forme d'un dégazeur sous vide est disposé est formé sur le conduit annulaire (2).

9. Sous-marin selon la revendication 8, **caractérisé en ce que** le dégazeur sous vide présente un récipient (12) de mise sous vide et une pompe (22) disposée à la sortie du récipient (12) de mise sous vide.

10. Sous-marin selon l'une des revendications 8 ou 9, **caractérisé en ce qu'**une soupape de blocage (18) asservie est disposée à l'entrée du dégazeur sous vide.

11. Sous-marin selon l'une des revendications 9 ou 10, **caractérisé en ce que** le récipient (12) de mise sous vide présente une sortie de gaz reliée par un conduit au récipient de contrôle (28).

12. Sous-marin selon la revendication 11, **caractérisé en ce que** l'ensemble de refroidissement présente des moyens de saisie de la quantité de gaz présente dans le récipient de contrôle (28).

13. Sous-marin selon l'une des revendications 11 ou 12, **caractérisé en ce que** des moyens de saisie de la pression qui règne dans le récipient de contrôle (28) sont prévus.

14. Sous-marin selon l'une des revendications 11 à 13, **caractérisé en ce que** des moyens de saisie de la température qui règne dans le récipient de contrôle (28) sont prévus.

15. Sous-marin selon l'une des revendications 8 à 14, **caractérisé en ce qu'**une entrée (38) de fluide de refroidissement dans l'ensemble de refroidissement est disposée sur le conduit (6) parallèle au conduit annulaire (2).

16. Sous-marin selon l'une des revendications 8 à 15, **caractérisé en ce que** l'ensemble d'agent de refroidissement présente un séparateur (9) de bulles.
